# EUROPÄISCHE PATENTSCHRIFT

(11) **EP 1 810 860 B1**
(45) Veröffentlichungstag und Bekanntmachung des Hinweises auf die Patenterteilung: **05.11.2008**
(21) Anmeldenummer: 07000653.1
(22) Anmeldetag: 13.01.2007
(51) Int. Cl.: B60J 7/20

(54) **Mehrgelenkkinematik für Heckdeckel von Fahrzeugen mit offenem Aufbau**
Multi-joint kinematics for tailgates of vehicles with open bodywork
Cinématique à plusieurs articulations pour couvercle de coffre de véhicules à carrosserie ouverte

(30) Priorität: 19.01.2006 DE 102006002827
(43) Veröffentlichungstag der Anmeldung: 25.07.2007
(73) Patentinhaber: Magna Car Top Systems GmbH, 74321 Bietigheim-Bissingen (DE)
(72) Erfinder: Schumacher, Thorsten, 25495 Kummerfeld (DE)

(56) Entgegenhaltungen:
- EP-A1- 1 283 119
- DE-A1- 10 237 148
- DE-B3- 10 340 017
- DE-B3-6102004 010 13

## Beschreibung

Die Erfindung betrifft eine Mehrgelenkkinematik für Heckdeckel von Fahrzeugen mit offenem Aufbau gemäß dem gleichlautenden Oberbegriff der Ansprüche 1 und 2.

Mehrgelenkanordnungen der vorgenannten Art sind aus der DE 103 40 017 B3 bekannt, bei der das Mehrgelenk als Siebengelenk aus zwei Lenkerkinematiken aufgebaut ist, die als Viergelenke einen gemeinsamen Drehpunkt aufweisen und in diesem Drehpunkt über sich kreuzende Lenker verbunden sind. Von diesen als Kreuzungslenker bezeichneten, sich überkreuzenden Lenkern ist einer heckdeckelseitig und einer karosserieseitig angelenkt, und der karosserieseitig angelenkte Kreuzungslenker ist aus seiner Anlenkung zur Karosserie lösbar, und zwar zur Verstellung des Heckdeckels in seine nach hinten oben aufgeschwenkte Funktionsstellung, in der über den Heckdeckel der Zugang zu einem Ablageraum für die geöffnete Dachabdeckung freigegeben wird. Angetrieben ist die Mehrgelenkkinematik über einen Linearantrieb, der karosserieseitig abgestützt ist und den mit der Karosserie drehfest verbundenen Lenker der karosserieseitigen Lenkerkinematik beaufschlagt. Der Linearantrieb, der durch einen Stellzylinder gebildet ist, bedingt bei dieser Lösung eine Lage im vom Heckdeckel übergriffenen Kofferraumbereich, die bauraumkritisch ist.

Die DE 102 37 148 A1 zeigt eine ähnliche Mehrgelenkanordnung.

Der Erfindung liegt die Aufgabe zugrunde, eine Mehrgelenkkinematik der eingangs genannten Art dahingehend auszubilden, dass sich über den Raumbedarf der Mehrgelenkkinematik als solcher hinausgehend für die Unterbringung des Linearantriebes kein wesentlicher Raumbedarf ergibt, und dies verbunden mit der Möglichkeit, sowohl für die Beladestellung wie auch für die Funktionsstellung des Heckdeckels ohne Zusatzaufwand Sperrlagen zu realisieren, und insbesondere den Heckdeckel in seiner Schließlage dichtend gegen die Karosserie zu verspannen.

Gemäß der Erfindung wird bezogen auf den erforderlichen Grundbauraum eine besonders vorteilhafte Mehrgelenkkinematik mit den Merkmalen des Anspruches 1 oder des Anspruches 2 erreicht, denen zufolge der Linearantrieb in die Mehrgelenkkinematik sich integrierend angeordnet ist, und zwar unter Verwendung eines Übertragungsgetriebes, über das die Mehrgelenkkinematik, zumindest in der Belade- und/oder Funktionsstellung, belastungsbedingt sichernd gehalten ist.

Hierzu ist das Übertragungsgetriebe kostengünstig und raumsparend als Lenkergetriebe ausgebildet, das in seiner Auslegung und in seinen Bewegungsabläufen darauf ausgerichtet ist, dass der Linearantrieb in den verschiedenen Stellungen der Mehrgelenkkinematik seine Ausrichtung zur Erstreckung des heckdeckelseitigen Kreuzungslenkers bzw. zur Erstreckung des Heckdeckels zumindest im Wesentlichen beibehält. Bevorzugt kann der Linearantrieb auch lagefest zum Kreuzungslenker bzw. zum Heckdeckel abgestützt sein.

Das Lenkergetriebe ist aus zwei Lenkern aufgebaut, die über ein Drehgelenk verbunden sind und deren einer als Führungslenker am Heckdeckel bzw. am heckdeckelseitigen Kreuzungslenker über ein Drehgelenk angebunden ist und deren anderer einen Brückenlenker bildet, über den der Führungslenker mit dem Linearantrieb verbunden ist. Dieser Aufbau des Lenkergetriebes macht es in einfacher Weise möglich, die Belade- und/oder Funktionsstellung des Heckdeckels als Sperrlage zu sichern, in der der Führungs- und der Brückenlenker über den Linearantrieb auf eine zusammengefaltete Endlage beaufschlagt sind.

Durch die Gestaltung der durch das Übertragungsgetriebe gebildeten Antriebsverbindung zwischen Linearantrieb und Mehrgelenkkinematik, derart, dass sich als jeweilige End- und Sperrlage eine totpunktnahe Lage ergibt, kann die Sicherung der Belade- und/oder Funktionsstellung des Heckdeckels über den Linearantrieb mit geringen Stellkräften gewährleistet werden.

Bedingt durch diese Art der Anlenkung des Linearantriebes im Übergangsbereich zwischen dem am Heckdeckel angelenkten Kreuzungslenker und dem Heckdeckel selbst ergibt sich beim Ausfahren des Linearantriebs im Sinne einer Verstellung des Heckdeckels in seine Belade- und/oder Funktionsstellung jeweils eine zusammenfaltende Bewegung zwischen Führungslenker und Brückenlenker, die bei Verstellung des Heckdeckels in seine Funktionsstellung in Verbindung mit einer schwenkbaren Anbindung des Heckdeckels an seinem rückwärtigen Ende zur Karosserie zu einer stabilen Abstützung des Heckdeckels führt, ungeachtet dessen, dass die Mehrgelenkkinematik bei der Umstellung des Heckdeckels in seine Funktionsstellung lediglich in einer ihrer Anlenkungen zur Karosserie mit der Karosserie verbunden ist. Bei der Umstellung des Heckdeckels in die Beladestellung ist über die Mehrgelenkkinematik zwar eine geführte Abstützung des Heckdeckels zur Karosserie gewährleistet, über das Übertragungsgetriebe erfolgt aber, wie auch bei der Abstützung in der Funktionsstellung, die Beaufschlagung über den Linearantrieb und damit die Lagesicherung der Mehrgelenkkinematik in ihrer der Beladestellung entsprechenden Stützlage.

Das Übertragungsgetriebe kann trotz dieser einfachen Grundausgestaltung auch zur Verriegelung des Heckdeckels in seiner Schließlage genutzt werden, wobei die umschlagende Bewegung des Brückenlenkers beim Einfahren des Linearantriebes erfindungsgemäß zur Verriegelung der Mehrgelenkkinematik bzw. des Heckdeckels gegenüber der Karosserie im Sinne eines Heranziehens des Heckdeckels an die Karosserie genutzt wird. Der Brückenlenker wird hierbei gegensinnig zur Schwenkbewegung bei der Umstellung in die Belade- bzw. Funktionsstellung gegenüber dem Führungslenker eingeschlagen, und diese Schwenkbewegung wird genutzt, um über einen peripher am Brückenlenker vorgesehenen Haken eine Verriegelung gegenüber der Karosserie zu realisieren, wobei der Zugriff des Hakens auf die Karosserie bevorzugt im Bereich der karosserieseitigen Anlenkung des mit der Karosserie über ein Drehlager fest verbundenen Lenkers der karosserieseitigen Lenkerkinematik erfolgt.

Insgesamt wird über eine derartig aufgebaute Mehrgelenkkinematik bei sehr kompakter Bauform eine stabile Abstützung bzw. Lage des Heckdeckels zur Karosserie gewährleistet, wobei sowohl seitens der Karosserie wie auch seitens des Heckdeckels die Anlenkungen der Mehrgelenkkinematik in kompakter Zuordnung zueinander vorgesehen sind und sich in einfacher Weise jeweils in einer Konsole zusammenfassen lassen, so dass auch gute Montagevoraussetzungen gewährleistet sind.

Weitere Einzelheiten und Merkmale der Erfindung ergeben sich aus den Ansprüchen. Ferner wird die Erfindung nachfolgend anhand von Ausführungsbeispielen näher erläutert. Es zeigen:
- Fig. 1: eine Mehrgelenkkinematik für einen Heckdeckel eines Fahrzeuges bei in die Beladestellung, das heißt bei nach vorne oben aufgeschwenktem Heckdeckel, wobei die Karosserie des Fahrzeuges heckseitig auslaufend mit dem karosserieseitigen Teil der Heckdeckelschlossanordnung gezeigt ist,
- Fig. 2: eine der Fig. 1 entsprechende Darstellung bei in die Funktionsstellung, das heißt nach hinten oben aufgeschwenktem Heckdeckel, um den Zugang für das nicht gezeigte, öffnungsfähige Dach des Fahrzeuges in einen heckseitigen Ablageraum zu ermöglichen,
- Fig. 3: eine den Fig. 1 und 2 entsprechende Darstellung bei in der Schließlage befindlichen, den Ablageraum überdeckenden Heckdeckel, und
- Fig. 4: eine weitere stark schematisierte Darstellung einer Mehrgelenkkinematik, in der Darstellung im Wesentlichen entsprechend jener in Fig. 1, wobei im Gegensatz zu Fig. 1 der zur Verstellung des Heckdeckels vorgesehene Linearantrieb lagemäßig dem Heckdeckel zugeordnet ist.

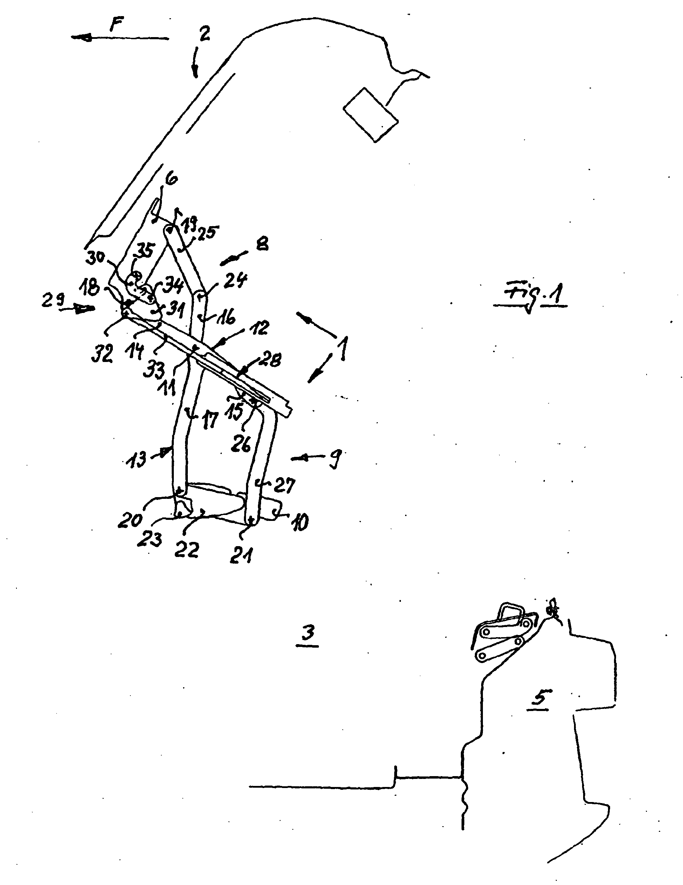

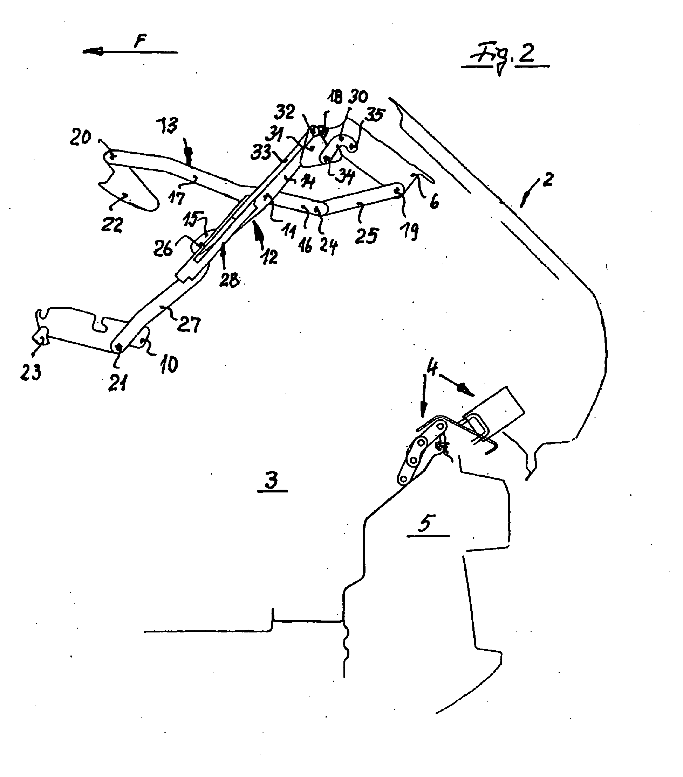

In den Fig. 1 bis 3 ist eine Mehrgelenkkinematik 1 für Heckdeckel 2 gezeigt, die bei einem nur teilweise gezeigten Fahrzeug mit offenem Aufbau vorgesehen ist, bei dem die Dachabdeckung bei geöffnetem Dach in einem heckseitigen Ablageraum 3 angeordnet ist. Dieser Ablageraum 3 ist heckseitig zum Fahrzeug vorgesehen und für den Zugang zum Ablageraum 3 bei der Verbringung des geöffneten Daches in den Ablageraum 3 ist der Heckdeckel 2, wie in Fig. 2 gezeigt, über die Mehrgelenkkinematik 1 nach hinten oben aufgeschwenkt, wobei der Heckdeckel 2 über eine Schlossanordnung 4 rückseitig zum Ablageraum 3 am heckseitigen Teil 5 der Fahrzeugkarosserie verriegelbar und schwenkbar angeordnet ist.

Die Mehrgelenkkinematik 1 ist am Heckdeckel 2 unter Zwischenschaltung einer zum Heckdeckel 2 lagefesten Konsole 6 in dessen bezogen auf die Fahrtrichtung F vorderen Bereich angelenkt und im Ausführungsbeispiel als Siebengelenkkinematik gestaltet, die zwei als Viergelenkanordnungen ausgebildete Lenkerkinematiken 8 und 9 umfasst, von denen die Lenkerkinematik 8 heckdeckelseitig und die Lenkerkinematik 9 karosserieseitig angebunden ist, wobei die karosserieseitige Anbindung durch eine Konsole 10 veranschaulicht ist, die zur Karosserie lagefest ist. Die beiden Lenkerkinematiken 8, 9 weisen ein gemeinsames Drehgelenk 11 auf. In dem Drehgelenk 11 sind die Lenkerkinematiken 8, 9 über ihre Kreuzungslenker 12, 13 verbunden, die mit ihren beiderseits des Drehgelenkes 11 liegenden Abschnitten jeweils einen der Lenker 14, 16 bzw. 15, 17 der jeweiligen Lenkerkinematik 8, 9 bilden.

Von den Lenkerkinematiken 8, 9 ist die heckdeckelseitige Lenkerkinematik 8 in zwei Drehgelenken 18, 19 an der Konsole 6 angelenkt, und in entsprechender Weise weist die karosserieseitige Lenkerkinematik 9 Anlenkungen zur karosserieseitigen Konsole 10 mit Drehgelenken 20, 21 auf. Das Drehgelenk 20, das in der Verbindung des Lenkers 17 des Kreuzungslenkers 13 zur karosserieseitigen Konsole 10 liegt, ist über ein Rastblech 22 mit der Konsole 10 zu verbinden und über eine seitens der Konsole 10 vorgesehene Sperrklinke 23 gegen die karosserieseitige Konsole 10 zu verriegeln.

Von den Kreuzungslenkern 12, 13 ist der karosserieseitig entriegelbar mit der Konsole 10 zu verbindende Kreuzungslenker 13 mit seinem der heckdeckelseitigen Lenkerkinematik 8 zugehörigen Abschnitt als Lenker 16 über ein Drehgelenk 24 mit dem Lenker 25 der Lenkerkinematik 8 verbunden, der über das Drehgelenk 19 an der Konsole 6 angelenkt ist.

Seitens des Kreuzungslenkers 12 ist dessen der karosserieseitigen Lenkerkinematik 9 zugehörige Abschnitt als Lenker 15 in einem Drehgelenk 26 mit einem Lenker 27 verbunden, der über das Drehgelenk 21 an der karosserieseitigen Konsole 10 befestigt ist.

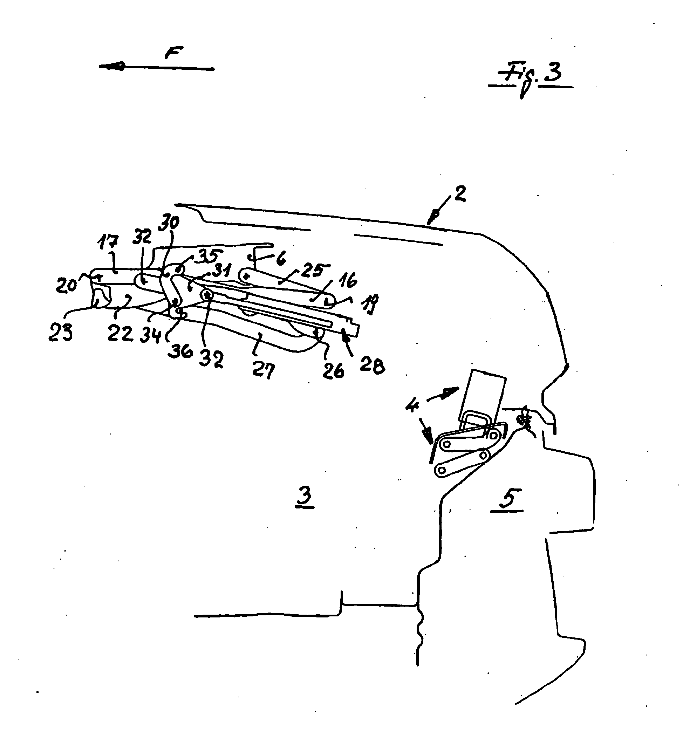

Im Ausführungsbeispiel gemäß Fig. 1 bis 3 ist zur Verstellung des Heckdeckels 2 zwischen seiner Beladestellung gemäß Fig. 1, seiner Funktionsstellung gemäß Fig. 2 und seiner Schließlage gemäß Fig. 3 ein gemeinsamer Antrieb vorgesehen, der als Linearantrieb 28 ausgebildet und im Ausführungsbeispiel durch einen Stellzylinder gebildet ist. Der Linearantrieb 28 ist, wie die Fig. 1 bis 3 veranschaulichen, gegen den Kreuzungslenker 12 abgestützt und erstreckt sich längs desselben in Richtung auf die heckdeckelseitige Konsole 6, an der der Kreuzungslenker 12 über das Drehgelenk 18 angebracht ist. In der Verbindung des Linearantriebes 28 zur Konsole 6 liegt ein Übertragungsgetriebe 29, das einen Führungslenker 30 und einen Brückenlenker 31 aufweist, von denen der Brückenlenker 31 über ein Gelenk 32 mit der Kolbenstange 33 des Linearantriebes 28 verbunden ist. Weiter weist der Brückenlenker 31 eine Anbindung zum Führungslenker 30 über ein Gelenk 34 auf, und es ist der Führungslenker 30 über eine weiteres Gelenk 35 an der Konsole 6 befestigt.

Nimmt der Heckdeckel 2 seine Beladestellung gemäß Fig. 1 ein, so ist über die Mehrgelenkkinematik 1 aufgrund der gegebenen Anbindung zu den Konsolen 6 und 10 eine kinematische Führung für den Heckdeckel 2 gegeben und über die Beaufschlagung des Übertragungsgetriebes 29 durch den Linearantrieb 28 erfolgt die Verstellung der Mehrgelenkkinematik 1 sowie des Heckdeckels 2 zwischen der Schließlage gemäß Fig. 3 und der Beladestellung gemäß Fig. 1, wobei das Übertragungsgetriebe 29 über den Linearantrieb 28 in Richtung auf seine der Beladestellung des Heckdeckels 2 entsprechende Lage verspannt ist und im Rahmen der Erfindung gegebenenfalls auch eine Verriegelungslage einnehmen kann.

Zur Verstellung des Heckdeckels 2 in seine Funktionsstellung gemäß Fig. 2, die ausgehend von der Schließlage gemäß Fig. 3 erfolgt, ist der Heckdeckel 2 über die Schlossanordnung 4 zum heckseitigen Teil 5 der Karosserie schwenkbar abgestützt. Über eine entsprechende Lenkeranordnung, insbesondere eine parallelogrammartige Lenkeranordnung ist die diesbezügliche Schwenkachse als Momentanachse verlagerbar, wenn der Heckdeckel 2 über die Mehrgelenkkinematik 1 in Schwenkrichtung beaufschlagt wird. Die Beaufschlagung erfolgt durch Ausfahren des Linearantriebes 28 nach Lösen der Anbindung des Kreuzungslenkers 13 zur karosserieseitigen Konsole 10, wenn über die Sperrklinke 23 das Rastblech 22 freigegeben wird. Über die durch das Übertragungsgetriebe 29 gebildete Verbindung zwischen dem Linearantrieb 28 und der heckdeckelseitigen Konsole 6 ergibt sich aufgrund der Schwenkbewegung des Brückenlenkers 31 zum Führungslenker 30 ein den Kreuzungslenker 12 in Richtung auf eine Strecklage zum Lenker 27, der in der Verbindung des Kreuzungslenkers 12 zur karosserieseitigen Konsole 10 liegt, belastendes Moment, durch das über die Mehrgelenkkinematik 1 eine winkelsteife Abstützung erreicht wird, analog zur Verspannung des Heckdeckels 1 bei dessen Abstützung in der Beladestellung gemäß Fig. 1.

Fig. 3 zeigt die Mehrgelenkkinematik 1 in ihrer der Schließlage des Heckdeckels 2 gemäß Fig. 3 entsprechenden, zusammengefahrenen Faltstellung, wobei die einzelnen Elemente der Mehrgelenkkinematik 1, soweit sie sichtbar sind, die bereits in Verbindung mit den Fig. 1 und 2 verwendeten Bezugszeichen tragen. Erkennbar ist insbesondere die sehr kompakte Faltstellung mit dem sich längs des Kreuzungslenkers 12 erstreckenden Linearantrieb 28, der über das Gelenk 32 an dem Brückenlenker 31 angreift, der durch Einfahren des Linearantriebes im Gegenuhrzeigersinn um das Gelenk 34 und in eine Überdeckungslage zum Führungslenker 30 verschwenkt ist, über das der Brückenlenker 31 mit dem Führungslenker 30 verbunden ist. Durch die Schwenkbewegung des Brückenlenkers 31 um die Achse des Gelenkes 34 wandert ein am Brückenlenker 31 seitlich versetzt zur Verbindungsgeraden zwischen den Gelenken 32 und 34 angeordneter Haken 36 in eine Eingriffslage zu einem nicht gezeigten Gegenglied, das durch einen Bolzen oder dergleichen gebildet sein kann, der karosseriefest angeordnet ist. Dadurch ist es möglich, in Verbindung mit der Verriegelung eine Verspannung des Heckdeckels 2 in Richtung auf seine Schließlage zu erreichen, so dass der Brückenlenker 31 auch die Funktion eines Verriegelungs- und/oder Spanngliedes ausübt, durch das der Heckdeckel 2 in die gegenüber der Karosserie gegebenen Dichtungen hineingezogen wird. Grundsätzlich liegt es auch im Rahmen der Erfindung, das Gegenglied zum Haken 36 am Brückenlenker 31 als Verriegelungsglied einem Lenker der Mehrgelenkkinematik, insbesondere deren Lenker 27 zuzuordnen, der in der Verbindung des am Heckdeckel 2 über ein Drehgelenk 32 angelenkten Kreuzungslenkers 12 zur karosserieseitigen Konsole 10 liegt und der in der Schließlage des Heckdeckels 2 bezogen auf das durch die Mehrgelenkkinematik 1 gebildete Lenkerpaket die unterste Lage einnimmt und nahe seinem dem Drehgelenk 21 zur Konsole 10 benachbarten Ende im Überdeckungsbereich zum Brückenlenker 31 liegt, so dass sich kurze Spannhebel ergeben. Bei der Verschwenkung des Brückenlenkers 31 durch das Einfahren des Linearantriebes 28 bewegt sich der mit dem Haken 36 verbundene Bereich des Brückenlenkers 31 in die Zugriffslage auf das nicht gezeigte Gegenglied im Wesentlichen in Stellrichtung des Linearantriebes 28, so dass sich günstige Belastungsverhältnisse ergeben. Zudem liegt der Brückenlenker 31 in der Schließlage des Heckdeckels 2 benachbart zum vorderen Ende des Heckdeckels 2 unterhalb der diesem zugeordneten Konsole 6, so dass sich günstige Spannverhältnisse ergeben, und zwar im Wesentlichen in Richtung der quer zur Spannrichtung des Linearantriebes 28 verlaufenden Verbindungsgeraden zwischen den am Brückenlenker 31 vorgesehenen Gelenken 32 und 34, auf der auch der Haken 36 in Schließlage des Heckdeckels 2 liegt.

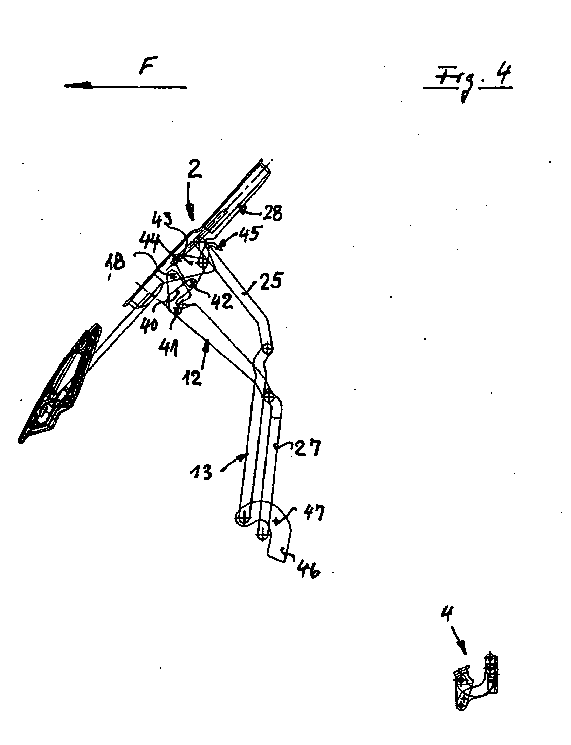

Fig. 4 veranschaulicht bezogen auf die Anordnung des Linearantriebes 28 eine Ausgestaltung, bei der der Linearantrieb 28 sich längs des Heckdeckels 2 erstreckt und bei der der mit 40 bezeichnete Führungslenker am am Heckdeckel 2 bzw. an dessen Konsole 6 angelenkten Kreuzungslenker 12 über ein Drehgelenk 41 befestigt ist. Über ein weiteres Drehgelenk 42 ist am anderen Ende des Führungslenkers 40 der Brückenlenker 43 angelenkt, der bei 44 mit dem Linearantrieb 28 verbunden ist und als Verriegelungsglied mit einem auskragenden Haken 45 versehen ist, der in hier nicht gezeigter Weise in der Schließlage des Heckdeckels 2 eine Verspannung und Sicherung desselben gegenüber der Karosserie ermöglicht, wobei der Haken 45 Zugriff auf das der angedeuteten karosserieseitigen Konsole 46 zugeordnete Gegenglied 47 nimmt.

Auch bei einem derartigen konstruktiven Aufbau ist der Linearantrieb 28 quasi erstreckungsgleich zu einem bereits vorhandenen Bauteil, hier dem Heckdeckel 2 angeordnet, so dass sich für den Linearantrieb kein wesentlicher zusätzlicher Bauraumbedarf ergibt und insbesondere in der zusammengefalteten, der Schließlage des Heckdeckels 2 entsprechenden Stellung der Mehrgelenkkinematik 1 eine sehr dichte Packung ergibt, und dies trotz der erfindungsgemäß in der Schließlage des Heckdeckels 2 erreichten Verspannung desselben.

## Patentansprüche

1. Mehrgelenkkinematik (1) für Heckdeckel (2) von Fahrzeugen mit offenem Aufbau, deren Dachabdeckung ein heckseitiger Ablageraum (3) zugeordnet ist und bei denen der Heckdeckel (2) in eine Schließlage, eine nach vorne oben aufgeschwenkte Beladestellung und in eine nach hinten oben aufgeschwenkte, den Zugang zum Ablageraum (2) für die geöffnete Dachabdeckung freigebende Funktionsstellung umstellbar ist, wobei die Mehrgelenkkinematik (1) zwei Lenkerkinematiken (8, 9) aufweist, die über einen gemeinsamen Linearantrieb (28) verstellbar sind und die über in einem gemeinsamen Drehgelenk (11) verbundene und über das Drehgelenk (11) durchlaufende Kreuzungslenker (12, 13) verbunden sind, deren einer Kreuzungslenker (12) heckdeckelseitig und deren anderer Kreuzungslenker (13) karosserieseitig angelenkt ist, und wobei von den Lenkerkinematiken (8, 9) die eine, heckdeckelseitige Lenkerkinematik (8) in zwei Drehgelenken (18, 19) am Heckdeckel (2) angelenkt ist und die andere, karosserieseitige Lenkerkinematik (9) zur Karosserie zwei Drehgelenke (20, 21) umfassende Anlenkungen aufweist, von denen die Anlenkung des karosserieseitig angebundenen Kreuzungslenkers (13) entriegelbar und bei Verstellung des Heckdeckels (2) in seine Funktionsstellung geöffnet ist,
**dadurch gekennzeichnet,**
**dass** der Linearantrieb (28) gegen den Heckdeckel (2) abgestützt und sich längs des heckdeckelseitig angelenkten Kreuzungslenkers (12) erstreckend an diesem Kreuzungslenker (12) angeordnet und abgestützt ist und dass der Linearantrieb (28) mit dem Heckdeckel (2) über ein Übertragungsgetriebe (29) antriebsverbunden ist, das, als Zweischlag ausgebildet, einen am Heckdeckel (2) angelenkten Führungslenker (30) und einen am Führungslenker (30) über ein Drehgelenk (34) angelenkten und mit dem Linearantrieb (28) über ein Drehgelenk (32) verbundenen Brückenlenker (31) aufweist, wobei der Führungslenker (30) und der Brückenlenker (31) in der Belade- und/oder Funktionsstellung des Heckdeckels vom Linearantrieb (28) auf eine zusammengefaltete Endlage als Sperrlage beaufschlagt sind.

2. Mehrgelenkkinematik (1) nach dem Oberbegriff des Anspruches 1,
**dadurch gekennzeichnet,**
**dass** der Linearantrieb (28) gegen den heckdeckelseitig angelenkten Kreuzungslenker (12) abgestützt und bei zum Heckdeckel (2) gleicher Erstreckung am Heckdeckel (2) angeordnet und abgestützt ist und dass der Linearantrieb (28) mit dem heckdeckelseitig angelenkten Kreuzungslenker (12) über ein Übertragungsgetriebe (29) antriebsverbunden ist, das, als Zweischlag ausgebildet, einen am heckdeckelseitigen Kreuzungslenker (12) angeordneten Führungslenker (40) und einen am Führungslenker (40) über ein Drehgelenk (42) angelenkten und mit dem Linearantrieb (28) über ein Drehgelenk (44) verbundenen Brückenlenker (43) aufweist, wobei der Führungslenker (40) und der Brückenlenker (43) in der Belade- und/oder Funktionsstellung des Heckdeckels (2) vom Linearantrieb (28) auf eine zusammengefaltete Endlage als Sperrlage beaufschlagt sind.

3. Mehrgelenkkinematik nach Anspruch 1,
**dadurch gekennzeichnet,**
**dass** der Linearantrieb (28) zum heckdeckelseitigen Kreuzungslenker (12) lagefest abgestützt ist.

4. Mehrgelenkkinematik nach Anspruch 2,
**dadurch gekennzeichnet,**
**dass** der Linearantrieb (28) zum Heckdeckel (2) lagefest abgestützt ist.

5. Mehrgelenkkinematik nach Anspruch 1 oder 2,
**dadurch gekennzeichnet,**
**dass** der Brückenlenker (31; 43) bei der Verstellung in die Belade- und/oder Funktionsstellung eine zum Führungslenker (30; 40) V-förmig ausgeschwenkte und einlaufend in die Belade- und/oder Funktionsstellung sich schließende Winkellage einnimmt.

6. Mehrgelenkkinematik nach Anspruch 1 oder 2,
**dadurch gekennzeichnet,**
**dass** die Sperrlage im Bereich einer Totpunktlage des Übertragungsgetriebes (29) liegt.

7. Mehrgelenkkinematik nach Anspruch 6,
**dadurch gekennzeichnet,**
**dass** die Sperrlage einer Totpunktlage entspricht.

8. Mehrgelenkkinematik nach Anspruch 6,
**dadurch gekennzeichnet,**
**dass** die Sperrlage einer Übertotpunktlage entspricht.

9. Mehrgelenkkinematik nach Anspruch 5, **dadurch gekennzeichnet,**
**dass** der Brückenlenker (31) in der Schließlage des Heckdeckels (2) ein gegen die Karosserie des Fahrzeuges festzulegendes Verriegelungsglied bildet.

10. Mehrgelenkkinematik nach Anspruch 9,
**dadurch gekennzeichnet,**
**dass** der Brückenlenker (31) als Verriegelungsglied mit einem umfangsseitig ausgreifenden Haken (36) versehen ist und über den Haken (36) bei der Schließlage des Heckdeckels (2) entsprechend eingefahrener Stellung des Linearantriebes (28) ein karosserieseitiges Gegenglied hintergreift.

11. Mehrgelenkkinematik nach Anspruch 10,
**dadurch gekennzeichnet,**
**dass** der umfangsseitig ausgreifende Haken (36) des Brückenlenkers (31) versetzt zu einer seine Anlenkungen verbindenden Geraden liegt.

12. Mehrgelenkkinematik nach einem der Ansprüche 10 oder 11,
**dadurch gekennzeichnet,**
**dass** der umfangsseitig ausgreifende Haken (36) des Brückenlenkers (31) in Erstreckungsrichtung der seine Anlenkungen verbindenden Geraden verläuft.

13. Mehrgelenkkinematik nach einem der Ansprüche 9 bis 12,
**dadurch gekennzeichnet,**
**dass** der Heckdeckel (2) in der Schließlage über den Brückenlenker (31) in Richtung auf seine Schließlage verspannt ist.

14. Mehrgelenkkinematik nach Anspruch 1 oder 2,
**dadurch gekennzeichnet,**
**dass** die Mehrgelenkkinematik (1) als Siebengelenkkinematik ausgebildet ist.

## Claims

1. Multi-joint kinematics (1) for tailgates (2) of vehicles with open bodywork, the roof covering of which vehicles is assigned a rear storage compartment (3) and in which the tailgate (2) can be moved into a closed position, a loading position, in which it is pivoted up to the front, and a functional position, in which it is pivoted up to the rear and opens up the access to the storage compartment (2) for the opened roof covering, wherein the multi-joint kinematics (1) has two linkage mechanisms (8, 9) which can be adjusted via a common linear drive (28) and are connected via cross links (12, 13) which are connected in a common rotary joint (11), pass through the rotary joint (11) and the one cross link (12) of which is articulated on the tailgate side and the other cross link (13) of which is articulated on the vehicle body side, and wherein, of the linkage mechanisms (8, 9), the one linkage mechanism (8) on the tailgate side is articulated in two rotary joints (18, 19) on the tailgate (2) and the other linkage mechanism (9) on the vehicle body side has, with respect to the vehicle body, articulations comprising two rotary joints (20, 21), of which the articulation of the cross link (13) connected on the vehicle body side can be unlocked and is opened during the displacement of the tailgate (2) into its functional position, **characterized in that** the linear drive (28) is supported against the tailgate (2) and is arranged and supported along the cross link (12) articulated on the tailgate side such that it extends along said cross link (12), and **in that** the linear drive (28) is connected in terms of drive to the tailgate (2) via a transmission gear (29) which, designed as a double-link joint, has a guide link (30) articulated on the tailgate (2) and a bridge link (31) which is articulated on the guide link (30) via a rotary joint (34) and is connected to the linear drive (28) via a rotary joint (32), the guide link (30) and the bridge link (31) being forced by the linear drive (28) into a folded-up end position as the locking position in the loading and/or functional position of the tailgate.

2. Multi-joint kinematics (1) according to the preamble of Claim 1, **characterized in that** the linear drive (28) is supported against the cross link (12) articulated on the tailgate side and is arranged and supported on the tailgate (2) while maintaining an identical extent with respect to the tailgate (2), and **in that** the linear drive (28) is connected in terms of drive to the cross link (12), which is articulated on the tailgate side, via a transmission gear (29) which, designed as a double-link joint, has a guide link (40) arranged on the cross link (12) on the tailgate side, and a bridge link (43) which is articulated on the guide link (40) via a rotary joint (42) and is connected to the linear drive (28) via a rotary joint (44), wherein the guide link (40) and the bridge link (43) are forced by the linear drive (28) into a folded-up end position as the locking position in the loading and/or functional position of the tailgate (2).

3. Multi-joint kinematics according to Claim 1, **characterized in that** the linear drive (28) is supported in a fixed position with respect to the cross link (12) on the tailgate side.

4. Multi-joint kinematics according to Claim 2, **characterized in that** the linear drive (28) is supported in a fixed position with respect to the tailgate (2).

5. Multi-joint kinematics according to Claim 1 or 2, **characterized in that**, during the displacement into the loading and/or functional position, the bridge link (31; 43) takes up an angular position in which it is pivoted out in a V-shaped manner with respect to the guide link (30; 40) and closes as the bridge link runs into the loading and/or functional position.

6. Multi-joint kinematics according to Claim 1 or 2, **characterized in that** the locking position is located in the region of a dead centre position of the transmission gear (29).

7. Multi-joint kinematics according to Claim 6, **characterized in that** the locking position corresponds to a dead centre position.

8. Multi-joint kinematics according to Claim 6, **characterized in that** the locking position corresponds to a position beyond the dead centre.

9. Multi-joint kinematics according to Claim 5, **characterized in that**, in the closed position of the tailgate (2), the bridge link (31) forms a locking element which is to be secured against the vehicle body.

10. Multi-joint kinematics according to Claim 9, **characterized in that** the bridge link (31) as the locking element is provided with a hook (36) reaching out circumferentially, and, when the tailgate (2) is in the closed position and with a correspondingly retracted position of the linear drive (28), engages via the hook (36) behind a mating element on the vehicle body side.

11. Multi-joint kinematics according to Claim 10, **characterized in that** the hook (36) of the bridge link (31), which hook reaches out circumferentially, is offset with respect to a straight line connecting its articulations.

12. Multi-joint kinematics according to either of Claims 10 and 11, **characterized in that** the hook (36) of the bridge link (31), which hook reaches out circumferentially, runs in the direction of extent of the straight line connecting its articulations.

13. Multi-joint kinematics according to one of Claims 9 to 12, **characterized in that**, in the closed position, the tailgate (2) is braced in the direction of its closed position via the bridge link (31).

14. Multi-joint kinematics according to Claim 1 or 2, **characterized in that** the multi-joint kinematics (1) is designed as a seven-bar mechanism.

## Revendications

1. Cinématique à plusieurs articulations (1) pour couvercle de coffre (2) de véhicules à carrosserie ouverte, dont la couverture de toit est associée à un espace de rangement arrière (3) et dans lesquels le couvercle de toit (2) est déplaçable dans une position de fermeture, dans une position de chargement relevée vers l'avant et dans une position fonctionnelle relevée vers l'arrière et libérant l'accès à l'espace de rangement (3) pour la couverture de toit ouverte, dans laquelle la cinématique à plusieurs articulations (1) comprend deux cinématiques à bielles (8, 9), qui sont déplaçables au moyen d'un entraînement linéaire commun (28) et qui sont reliées par des bielles croisées (12, 13) assemblées en une articulation rotative commune (11) et se prolongeant au-delà de l'articulation rotative (11), dont une bielle croisée (12) est articulée du côté du couvercle de coffre et dont l'autre bielle croisée (13) est articulée du côté de la carrosserie, et dans laquelle, parmi les cinématiques à bielles (8, 9), une première cinématique à bielles (8), du côté du couvercle de coffre, est articulée en deux articulations rotatives (18, 19) au couvercle de coffre (2) et l'autre cinématique à bielles (9), du côté de la carrosserie, présente des articulations à la carrosserie comprenant deux articulations rotatives (20, 21), par lesquelles l'articulation de la bielle croisée (13) reliée du côté de la carrosserie peut être déverrouillée et est ouverte lors du déplacement du couvercle de coffre (2) dans sa position fonctionnelle, **caractérisée en ce que** l'entraînement linéaire (28) s'appuie contre le couvercle de coffre (2) et est disposé et appuyé sur cette bielle croisée (12) en s'étendant le long de la bielle croisée (12) articulée du côté du couvercle de coffre, et **en ce que** l'entraînement linéaire (28) est en liaison d'entraînement avec le couvercle de coffre (2) au moyen d'un mécanisme de transmission (29) qui, réalisé en forme de mécanisme double, comprend une bielle de guidage (30) articulée au couvercle de coffre (2) et une bielle de pont (31) articulée à la bielle de guidage (30) au moyen d'une articulation rotative (34) et reliée à l'entraînement linéaire (28) au moyen d'une articulation rotative (32), dans laquelle la bielle de guidage (30) et la bielle de pont (31) sont, dans la position de chargement et/ou la position fonctionnelle du couvercle de coffre, poussées par l'entraînement linéaire (28) à une position finale repliée comme position d'arrêt.

2. Cinématique à plusieurs articulations (1) selon le préambule de la revendication 1, **caractérisée en ce que** l'entraînement linéaire (28) s'appuie contre la bielle croisée (12) articulée du côté du couvercle de coffre et est disposé et appuyé sur le couvercle de coffre (2) lors d'une même extension vers le couvercle de coffre (2), et **en ce que** l'entraînement linéaire (28) est en liaison d'entraînement avec la bielle croisée (12) articulée du côté du couvercle de coffre au moyen d'un mécanisme de transmission (29) qui, réalisé en forme de mécanisme double, comprend une bielle de guidage (40) disposée sur la bielle croisée (12) du côté du couvercle de coffre et une bielle de pont (43) articulée à la bielle de guidage (40) au moyen d'une articulation rotative (42) et reliée à l'entraînement linéaire (28) au moyen d'une articulation rotative (44), dans laquelle la bielle de guidage (40) et la bielle de pont (43) sont, dans la position de chargement et/ou la position fonctionnelle du couvercle de coffre (2), poussées par l'entraînement linéaire (28) à une position finale repliée comme position d'arrêt.

3. Cinématique à plusieurs articulations selon la revendication 1, **caractérisée en ce que** l'entraînement linéaire (28) est appuyé en position fixe sur la bielle croisée (12) du côté du couvercle de coffre.

4. Cinématique à plusieurs articulations selon la revendication 2, **caractérisée en ce que** l'entraînement linéaire (28) est appuyé en position fixe sur le couvercle de coffre (2).

5. Cinématique à plusieurs articulations selon la revendication 1 ou 2, **caractérisée en ce que** la bielle de pont (31; 43) occupe, lors du déplacement dans la position de chargement et/ou la position fonctionnelle, une position angulaire orientée en V par rapport à la bielle de guidage (30; 40) et se fermant en arrivant dans la position de chargement et/ou la position fonctionnelle.

6. Cinématique à plusieurs articulations selon la revendication 1 ou 2, **caractérisée en ce que** la position d'arrêt se trouve dans la région de position d'un point mort du mécanisme de transmission (29).

7. Cinématique à plusieurs articulations selon la revendication 6, **caractérisée en ce que** la position d'arrêt correspond à une position de point mort.

8. Cinématique à plusieurs articulations selon la revendication 6, **caractérisée en ce que** la position d'arrêt correspond à une position au-delà du point mort.

9. Cinématique à plusieurs articulations selon la revendication 5, **caractérisée en ce que** la bielle de pont (31) forme, dans la position de fermeture du couvercle de coffre (2), un organe de verrouillage à fixer contre la carrosserie du véhicule.

10. Cinématique à plusieurs articulations selon la revendication 9, **caractérisée en ce que** la bielle de pont (31) formant organe de verrouillage est pourvue d'un crochet d'accrochage (36) sortant en périphérie et s'accroche par le biais du crochet d'accrochage (36) derrière un organe opposé du côté de la carrosserie lorsque l'entraînement linéaire (28) se trouve dans une position rentrée correspondant à la position de fermeture du couvercle de coffre (2).

11. Cinématique à plusieurs articulations selon la revendication 10, **caractérisée en ce que** le crochet d'accrochage (36) de la bielle de pont (31), sortant en périphérie, est décalé par rapport à une droite reliant ses articulations.

12. Cinématique à plusieurs articulations selon l'une des revendications 10 ou 11, **caractérisée en ce que** le crochet d'accrochage (36) de la bielle de pont (31), sortant en périphérie, est orienté dans la direction d'extension de la droite reliant ses articulations.

13. Cinématique à plusieurs articulations selon l'une quelconque des revendications 9 à 12, **caractérisée en ce que** le couvercle de coffre (2) en position de fermeture est maintenu en direction de sa position de fermeture au moyen de la bielle de pont (31).

14. Cinématique à plusieurs articulations selon la revendication 1 ou 2, **caractérisée en ce que** la cinématique à plusieurs articulations (1) est une cinématique à sept articulations.
